(19) Europäisches Patentamt / European Patent Office / Office européen des brevets

(11) **EP 3 088 539 B1**

(12) **EUROPÄISCHE PATENTSCHRIFT**

(45) Veröffentlichungstag und Bekanntmachung des Hinweises auf die Patenterteilung:
**09.10.2019 Patentblatt 2019/41**

(51) Int Cl.:
***C22B 1/00*** (2006.01)     ***C02F 11/14*** (2019.01)

(21) Anmeldenummer: **15165571.9**

(22) Anmeldetag: **29.04.2015**

(54) **BEHANDLUNG VON WASSERHALTIGEN ERZ-AUFBEREITUNGSRÜCKSTÄNDEN**

TREATMENT OF WATER-CONTAINING ORE PROCESSING RESIDUES

TRAITEMENT DE RÉSIDUS DE PRÉPARATION DE MINERAI CONTENANT DE L'EAU

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(43) Veröffentlichungstag der Anmeldung:
**02.11.2016 Patentblatt 2016/44**

(73) Patentinhaber: **Evonik Degussa GmbH
45128 Essen (DE)**

(72) Erfinder:
• **Zur Mühlen, Annette
  47803 Krefeld (DE)**
• **Ploch, Joanna
  47877 Willich (DE)**
• **Kleinen, Jochen
  52525 Heinsberg (DE)**
• **Smith, Scott
  40489 Düsseldorf (DE)**

(74) Vertreter: **Evonik Patent Association
c/o Evonik Industries AG
IP Management
Bau 1042A/PB 15
Paul-Baumann-Straße 1
45772 Marl (DE)**

(56) Entgegenhaltungen:
WO-A1-2011/097367     FR-A1- 2 712 306
GB-A- 2 271 350

• **FALL M ET AL: "Potential use of densified
  polymer-pastefill mixture as waste containment
  barrier materials", WASTE MANAGEMENT,
  ELSEVIER, NEW YORK, NY, US, Bd. 30, Nr. 12, 1.
  Dezember 2010 (2010-12-01), Seiten 2570-2578,
  XP027427887, ISSN: 0956-053X, DOI:
  10.1016/J.WASMAN.2010.07.016 [gefunden am
  2010-09-06]**
• **FARKISH AIDA ET AL: "Rapid dewatering of oil
  sand mature fine tailings using super absorbent
  polymer (SAP)", MINERALS ENGINEERING, Bd.
  50, 4. Juli 2013 (2013-07-04), Seiten 38-47,
  XP028704531, ISSN: 0892-6875, DOI:
  10.1016/J.MINENG.2013.06.002**

**Beschreibung**

Die Erfindung liegt auf dem Gebiet der Tailings und der Superabsorber. Sie betrifft den Einsatz von Superabsorber zur Behandlung von Tailings, vorzugsweise mit Blick auf die Verbesserung der Lagerung der Tailings, insbesondere in übertägigen Rückstandsspeichern.

Zur Aufbereitung von Erzen und bei der Gewinnung von Metallen aus den Erzen werden diese in der Regel auf eine bestimmte Korngröße gebrochen, gemahlen oder zerkleinert und danach chemischen und/oder mechanischen Trennungsverfahren unterworfen. Insbesondere werden die zerkleinerten Erze einem Laugungsprozess unterworfen, wobei je nach Erzart eine Behandlung z.B. mit alkalischen oder mit sauren Lösungsmitteln oder eine anderweitige, chemische oder biologische Behandlung erfolgt. Auch gravitative Trennungsmethoden kommen regelmäßig zur Anwendung. Weiterhin können metallurgische Extraktionsverfahren angewendet werden, z.B. aus der Pyrometallurgie, Hydrometallurgie und/oder Elektrometallurgie.

Bei dem Erzaufbereitungs- und Metallgewinnungsprozess fallen jeweils erhebliche Mengen an Rückständen bzw. Abfällen an, die mit dem Fachbegriff "Tailings" (= Erz-Aufbereitungsrückstände) bezeichnet werden. Tailings sind also Rückstände, die bei der Verarbeitung von Erzen anfallen bzw. es sind Minenabfälle, die nach erfolgter Gewinnung der Erze durch konventionelle Verfahren wie z.B. Flotation oder anderen z.B. magnetischen Verfahren, gewöhnlich nur noch einen sehr geringen Restanteil an Werterzen aufweisen. Da zunehmend Lagerstätten mit geringen Erzgehalten angefahren werden, nimmt das Volumen solcher Tailings immer mehr zu.

Tailings enthalten feste und flüssige Bestandteile, wie z.B. Prozesswasser aus der Erzaufbereitung. Die festen Bestandteile sind in der Regel feinkörnige Sedimente des gemahlenen Erzes und Minerale, welche sich z.B. mit der Laugung der Erze bilden.

Oftmals sind in den Tailings auch noch Rückstände der bei der Extraktion von Metallen aus dem Erz verwendeten Chemikalien enthalten.

Die Entsorgung dieser Tailings, die in erheblichen Mengen anfallen, ist eine wichtige Aufgabe im Rahmen der Erzverarbeitung und Metallgewinnung. Beispielsweise können die Tailings hierfür in Lagerungsstätten gegeben werden, insbesondere in übertägige Rückstandsspeicher eingelagert werden. Übertägige Rückstandsspeicher werden auch als sogenannte Tailings Storage Facilities (TSF) bezeichnet.

Eine wichtige Grundanforderung für eine übertägige Rückstandsspeicheranlage ist es, eine stabile und ökonomische Speicherung der Aufbereitungsrückstände zu gewährleisten.

Ein Problem bei der Einlagerung der Tailings in die übertägigen Rückstandsspeicher besteht darin, dass die Anfangsfestigkeiten der Tailings in der Regel vielfach sehr gering sind, so dass die Tailings weitflächig wegfließen. Dadurch ergibt sich eine eher ineffiziente Flächennutzung, weil pro Flächeneinheit wenig Masse abgelagert werden kann. Deshalb werden die Massen z.B. mit Dämmen eingegrenzt, um das Wegfließen zu unterbinden, wobei das Brechen solcher Dämme unbedingt vermieden werden muss.

Bisher werden deshalb mitunter Verdickerprozesse verwendet, z.B. über den Einsatz wasserlöslicher Polymere als Verdicker, um die relativ fließfähigen Tailings in eine weniger fließfähige Masse zu überführen. Die Verdickung kann z.B. auch über Filtration oder Separation durch Schwerkraftsedimentation (gravity sedimentation seperation) genutzt sowie via Zyklonabscheider und Zentrifugen erfolgen, was allerdings sehr aufwändig ist. Auch werden thermische Prozesse zur Verarbeitung der Tailings verwendet, was energetisch ungünstig ist. Z.T. sind diese Prozesse sehr kostenintensiv, es müssen hohe Investitionen getätigt werden und es sind zeitaufwendige Prozesse. Solches Vorgehen ist also unbefriedigend.

Additive werden bei der Verdickung der Tailings bisher eher seltener verwendet. In der Literatur werden z.B. Kalksandstein-Gemische oder Tone als Zuschlagsstoffe zur Verarbeitung der Tailings erwähnt. Diese haben den Nachteil, dass sie homogen eingemischt und in großen Mengen eingesetzt werden müssen, um eine Wirkung zu erzielen. Zudem kann z.B. Gips gebildet werden, wodurch sich die Förderpipelines zusetzen können und der gesamte Einlagerungsprozess blockiert werden kann. Ein bedeutender Nachteil ist weiterhin, dass dadurch die Masse der Tailings stark erhöht wird. Zudem wird die Krustenbildung nicht reduziert. Die resultierenden Massen sind instabil. Man findet gewöhnlich außen eine trockene Kruste und darunter ein sehr feuchtes Material. Wird der Druck auf dieses Material zu groß, fängt der Haufen an zu zerlaufen oder sogar abzurutschen, was je nach der Menge der abgelagerten Tailings zu gefährlichen Verwerfungen führen kann. Eine stabile und ökonomische Speicherung der Erz-Aufbereitungsrückstände kann auf diese Weise leider nicht gewährleistet werden.

GB 2 271 350 A offenbart eine Methode zur Erhöhung der Schubfestigkeit von Erzrückständen, um diese Rückstände geeignet für den Einsatz in Bauindustrie zu machen . Die Rückstände werden mit einem "Mannich acrylamide polymer and a dimethyldiallylammonium halide polymer" zusammengemischt, wobei die Menge an Polymer zwischen 0.03 bis 0.5% variiert. Die Festigkeit wird von 1.8 kPa bis auf 3.0 kPa erhöht.

Der Aufsatz

FALL M et al.: Potential use of densified polymer-pastefill mixture as waste containment barrier materials. WASTE MANAGEMENT, ELSEVIER, NEW YORK, Bd. 30, Nr. 12, 1. Dezember 2010, Seiten 2570-2578, ISSN: 0956-053X, DOI: 10.1016/J.WASMAN.2010.07. 016
befasst sich mit der Behandlung von Erz-Aufbereitungsrückständen, wobei ein vernetztes NatriumPolyacrylat eingesetzt wird.

Aufgabe der vorliegenden Erfindung war es, vor diesem Hintergrund eine einfache Möglichkeit bereitzustellen, mit welcher es möglich ist, in übertägigen Rückstandsspeicheranlagen eine stabilere und ökonomischere Speicherung der Erz-Aufbereitungsrückstände zu gewährleisten.

Es konnte nun in unerwarteter Weise gefunden werden, dass der Einsatz von Superabsorbern, wie nachstehend angegeben, zur Behandlung der Erz-Aufbereitungsrückstände dies ermöglicht, indem er eine Erhöhung des komplexen Schubmoduls G* und/oder der maximalen Belastung bewirkt.

Gegenstand der Erfindung ist ein Verfahren nach Anspruch 1.

Offenbart wird auch ein Verfahren zur Behandlung von wasserhaltigen Erz-Aufbereitungsrückständen mit Superabsorber zur Erhöhung des komplexen Schubmoduls G* bei einer Schubspannung von 1 Pa (vorzugsweise bis zu einer Schubspannung in Höhe von 80% der maximal an dem unbehandelten Erz-Aufbereitungsrückstand erreichbaren Schubspannung, d.h. vorzugsweise bis zu einer Schubspannung in Höhe von 80% der maximalen Belastung des unbehandelten Erz-Aufbereitungsrückstandes) um mindestens 10 %, vorzugsweise mindestens 30 %, insbesondere mindestens 50 % gegenüber dem unbehandelten Erz-Aufbereitungsrückstand, wobei der Wert des komplexen Schubmoduls G* des unbehandelten Erz-Aufbereitungsrückständes bei einer Schubspannungsbelastung von 1 Pa vorzugsweise mindestens 500 Pa, weiter bevorzugt mindestens 750 Pa, insbesondere mindestens 1000 Pa beträgt, wobei das komplexe Schubmodul G* nach der hierin definierten Methode bestimmt wird, und wobei der Superabsorber in einpolymerisierter Form

    a) mindestens 50 Mol-% bezogen auf den Superabsorber eines oder mehrerer monoethylenisch ungesättigte, Säuregruppen enthaltende Monomere, wobei der Neutralisationsgrad der monoethylenisch ungesättigten, Säuregruppen enthaltenden Monomere vorzugsweise 15 bis 85 Mol-% beträgt und

    b) vorzugsweise 0,015 bis 0,1 Mol-% bezogen auf die Gesamtmenge Monomere mindestens eines Vernetzers, sowie
    c) gegebenenfalls ein oder mehrere ethylenisch und/oder allylisch ungesättigte Monomere, die von den Monomeren a) verschieden sind und mit ihnen copolymerisierbar sind, enthält, wobei der Superabsorber gegebenenfalls oberflächenbehandelt ist, vorzugsweise unter Einsatz von Antibackmittel und/oder Fließhilfsmittel, sowie vorzugsweise oberflächenvernetzt ist.

Offenbart wird auch ein Verfahren zur Behandlung von wasserhaltigen Erz-Aufbereitungsrückständen mit Superabsorber zur Erhöhung der maximalen Belastung um mindestens 10 %, vorzugsweise mindestens 25 %, insbesondere mindestens 50 % gegenüber dem unbehandelten Erz-Aufbereitungsrückstand, wobei der Wert der maximalen Belastung des unbehandelten Erz-Aufbereitungsrückständes vorzugsweise mindestens 25 Pa, vorteilhafterweise mindestens 50 Pa, weiter bevorzugt mindestens 65 Pa, insbesondere mindestens 85 Pa beträgt, wobei die maximale Belastung nach der hierin definierten Methode bestimmt wird, und wobei der Superabsorber in einpolymerisierter Form

    a) mindestens 50 Mol-% bezogen auf den Superabsorber eines oder mehrerer monoethylenisch ungesättigte, Säuregruppen enthaltende Monomere, wobei der Neutralisationsgrad der monoethylenisch ungesättigten, Säuregruppen enthaltenden Monomere 15 bis 85 Mol-% beträgt und

    b) vorzugsweise 0,015 bis 0,1 Mol-% bezogen auf die Gesamtmenge Monomere mindestens eines Vernetzers, sowie
    c) gegebenenfalls ein oder mehrere ethylenisch und/oder allylisch ungesättigte Monomere, die von den Monomeren a) verschieden sind und mit ihnen copolymerisierbar sind,

enthält, wobei der Superabsorber gegebenenfalls oberflächenbehandelt ist, vorzugsweise unter Einsatz von Antibackmittel und/oder Fließhilfsmittel, sowie vorzugsweise oberflächenvernetzt ist.

Erfindungsgemäß behandelte Erz-Aufbereitungsrückstände sind stabil und ökonomisch in übertägigen Rückstandsspeicheranlagen speicherbar. Sie können besonders schnell eine stabile Struktur ausbilden. Sie zeigen ein verbessertes Trocknungsverhalten, da eine oberflächliche Krustenbildung vermindert wird und somit die Austrocknung auch von tiefer oder innen liegenden Schichten verbessert wird.

Erfindungsgemäß behandelte Erz-Aufbereitungsrückstände zeigen vorteilhafterweise auch ein verbessertes Transportverhalten, insbesondere mit Blick auf das Pumpverhalten. Oftmals kommt es beim Pumpen von Tailings zur Sedimentation von größeren Partikeln. Überraschend konnte jetzt gefunden werden, dass der erfindungsgemäße Superabsorbereinsatz die Sedimentation wirkungsvoll reduzieren kann.

Auch der Transport der Erz-Aufbereitungsrückstände mit Lastwagen wird verbessert. Durch die erfindungsgemäße Superabsorberzugabe wird in den Tailings eine stabile Struktur ausgebildet. Dadurch kommt es erst bei großen Belastungen (z.B. Abkippen der Ladung) zur Deformation und somit zum Fließen des Tailings, während kleinere Belastungen des Tailings wie sie z.B. beim Beladen des Lastwagens und beim Transport des Tailings im Lastwagen auftreten, nicht zum Fließen führen. Dadurch wird einer Kontamination der Umwelt während des Transports mit Lastwagen entgegengewirkt.

Auch der Transport mit Förderbändern wird verbessert. Durch die erfindungsgemäße Superabsorberzugabe wird in den Tailings eine stabile Struktur ausgebildet, was sich positiv auf die Förderung der Tailings durch Förderbänder auswirkt. Die Tailings können auf steileren Förderbändern transportiert werden, da sie erst bei größerer Belastung fließen. Dadurch, dass Förderbänder steiler gestellt sein können, müssen weniger Förderbänder eingesetzt werden, um eine bestimmte Höhendifferenz zu überwinden. Damit geht ein weiterer Vorteil einher. Durch den größeren Neigungswinkel drainiert mehr Flüssigkeit aus dem Tailing, so dass weniger Masse transportiert werden muss, einhergehend mit verbesserter Energieeffizienz. Außerdem wirkt sich der niedrigere Wassergehalt positiv auf den Winkel des abgelagerten Tailings aus.

Auch die Verarbeitung von sogenannten "dry stacked tailings" wird erleichtert. "Dry stacked tailings" sind entwässerte Tailings, die zur Entsorgung gestapelt werden können.

Durch die erfindungsgemäße Superabsorberzugabe wird die Fließfähigkeit der Tailings reduziert. Dadurch kann das dry stack-Verfahren einfacher angewendet werden. Die erfindungsgemäße Superabsorberzugabe ermöglicht die Errichtung höherer Stapel. Durch die erfindungsgemäße Superabsorberzugabe wird eine Stapelbarkeit auch bei geringerer Entwässerung ermöglicht.

Weiterhin ergeben sich erfindungsgemäß verbesserte Lagereigenschaften, insbesondere mit Blick auf die Abwehr von Abtragung der Erz-Aufbereitungsrückständen durch Wind, Frost und/oder Wasser im Zusammenhang mit Umwelteinflüssen. Dies vermindert auch deutlich die Bildung von Staub.

Ein weiterer Vorteil der Erfindung besteht darin, dass durch den erfindungsgemäßen Superabsorbereinsatz die Bodenstruktur aufgelockert wird, wodurch der Boden weniger kompakt und damit für die Wiederbeflanzung deutlich besser geeignet ist. Auch ergibt sich ein positiver Effekt auf die Wasserhaltekapazität des Bodens an sich.

Die aufgelockerte Bodenstruktur sowie die erhöhte Wasserhaltekapazität des Bodens beugen der Dammbruchgefahr vor, denn auf diese Weise wird der Druck auf einen Damm erniedrigt. Dammbrüche bei Tailings können enorme ökologische Folgeschäden verursachen, da u.a. viele Tailings toxikoloisch bedenkliche Stoffe enthalten können.

Oftmals wird auch Sand zu den Tailings zugesetzt, um die Bodenstruktur aufzulockern. Das ist insofern problematisch, da Sand in großen Mengen nicht überall verfügbar ist und die Gesamtmasse der Tailings dadurch weiter erhöht wird. Durch den erfindungsgemäßen Superabsorbereinsatz kann die optionale Sandzugabe reduziert - oder je nach Tailingstruktur - sogar ganz weggelassen werden, obwohl dennoch eine gewünschte Bodenstrukturauflockerung erreicht wird.

Besonders vorteilhaft ist die vorliegende Erfindung mit Blick auf die Eintrocknung der Tailings. Die Partikel der Tailings haben gewöhnlich eine sehr geringe Partikelgröße. Deshalb neigen sie bei der Eintrocknung zu Kompaktierung. Zunächst trocknen die obersten Schichten. Es bildet sich eine Kruste aus. Dadurch werden die unteren Schichten und die inneren Bereiche am Abtrocknen stark behindert. Dies hat zur Folge, dass nicht so hoch gestapelt werden kann, oder hierfür länger gewartet werden muss. Zudem können die Stapel leicht auseinanderbrechen, dies stellt ein großes Sicherheitsrisiko dar. Der erfindungsgemäße Superabsorbereinsatz ermöglicht überraschenderweise, dass auch untere Schichten und innere Bereiche deutlich besser und schneller abtrocknen.

Noch ein weiterer Vorteil des erfindungsgemäßen Superabsorbereinsatzes liegt darin, dass diese im wesentlichen wasserunlöslich sind. Ein Nachteil von bisher zur Behandlung von Tailings eingesetzten Mitteln besteht nämlich darin, dass diese oftmals wenigstens teilweise wasserlöslich sind oder z.B. wasserlösliche Polymere enthalten. Solche Mittel können bei Wassereintritt, z.B. infolge Regen, leicht gelöst und dann ausgewaschen und ausgetragen werden. Die erfindungsgemäßen Superabsorber verbleiben dagegen an ihrem Platz, da sie wasserunlöslich sind.

Ein weiterer Vorteil des erfindungsgemäßen Superabsorbereinsatzes betrifft deren Stabilität. Viele alternative Stoffe werden von Mikroorganismen oder Umwelteinflüsse z.B. bei höheren Temperaturen schnell zersetzt, so dass eine eventuell stabilisierende Wirkung auf das Tailing rasch abhanden kommen kann. Das geht mit enormen Problemen einher. Der erfindungsgemäße Superabsorbereinsatz ermöglicht dagegen eine sehr gute Langzeitstabilisierung, da erfindungsgemäße Superabsorber nur sehr schwer biologisch abbaubar sind und auch in Gegenwart von Mikroorganismen und bei extremen Umwelteinflüssen wirksam bleiben.

Ein weiterer Vorteil der vorliegenden Erfindung liegt außerdem darin, dass beim Ausbringen von Tailings gewöhnlich die feinen von groben Materialien getrennt werden in der Art, dass die Tailings mit kleineren Partikeln nach außen getragen werden, da die gröberen Partikel schneller sedimentieren. Durch den erfindungsgemäßen Superabsorbereinsatz kann diese Sedimentation wirkungsvoll vermindert werden. Dadurch kommt es zu einer homogeneren Verteilung und es können in einem bestimmten Areal größere Mengen stabiler gelagert werden.

Im erfindungsgemäßen Verfahren kommen Superabsorber zum Einsatz. Superaborber als solche sind bekannt. Im Sinne dieser Erfindung handelt es sich dabei insbesondere um wasserunlösliche, vernetzte Polymere, die in der Lage sind, unter Quellung und Ausbildung von Hydrogelen große Mengen an wässrigen Flüssigkeiten aufzunehmen und unter einem bestimmten Druck zurückzuhalten. Sie liegen im Sinne dieser Erfindung insbesondere in Form von diskreten Partikeln, als Partikelaggregate oder in Kombinationen davon vor, und können Partikel umfassen, die in einer Flüssigkeit suspendiert sind. Erfindungsgemäße Superabsorber absorbieren vorzugsweise mindestens das 100-fache ihres Eigengewichts an Wasser. Weitere Einzelheiten zu Superabsorbern und eine allgemeine Beschreibung von Superabsorben sind in "Modern Superabsorben Polymer Technology", F. L. Buchholz, A. T. Graham, Wiley-VCH, 1998" offenbart, hierin als Referenz in seiner Gesamtheit einbezogen.

Die erfindungsgemäßen Superabsorber umfassen in einpolymerisierter Form wenigstens 50 Mol-%, bezogen auf den Superabsorber, eines oder mehrere monoethylenisch ungesättigter, säuregruppenhaltiger Monomere, welche teilweise oder vollständig, bevorzugt teilweise, neutralisiert sein können.

Erfindungsgemäß sind die monoethylenisch ungesättigten, säuregruppenhaltigen Monomere zumindest teilweise neutralisiert, insbesondere zu 15-85 Mol-% neutralisiert, um eine verbesserte Wasserabsorption zu gewährleisten.

Beispiele für geeignete Monomere zur Herstellung erfindungsgemäß einsetzbarer Superabsorber sind Acrylsäure, Methacrylsäure, Vinylsulfonsäure, Vinylphosphonsäure, Crotonsäure, Maleinsäure, Maleinsäureanhydrid, Itaconsäure, Fumarsäure, , 2-Acrylamido-2-Methylpropansulfonsäure, 2-Acrylamido-2-Methylpropanphosphonsäure sowie andere aus dem Stand der Technik bekannte Monomere. Die Monomeren können allein oder in Mischung untereinander eingesetzt werden.

Bevorzugt einsetzbare Monomere sind Acrylsäure, Methacrylsäure, Vinylsulfonsäure, 2-Acrylamido-2-Methylpropansulfonsäure oder Mischungen dieser Säuren, beispielsweise Mischungen aus Acrylsäure und Methacrylsäure, Mischungen aus Acrylsäure und 2-Acrylamido-2-Methylpropansulfonsäure oder Mischungen aus Acrylsäure und Vinylsulfonsäure. Besonders bevorzugt ist Acrylsäure.

Die Säuregruppen in den Monomeren sind vorzugsweise zumindest teilweise neutralisiert. Die Neutralisation kann vor, während oder nach der Polymerisation in allen dafür geeigneten Apparaturen vorgenommen werden. Als Neutralisationsmittel verwendbar sind z.B. Alkalimetallbasen, Ammoniak oder Amine. Vorzugsweise wird Natronlauge, Kalilauge oder Lithiumhydroxid verwendet. Die Neutralisation kann auch mit Hilfe von Natriumcarbonat, Natriumhydrogencarbonat, Kaliumcarbonat oder Kaliumhydrogencarbonat oder anderen Carbonaten oder Hydrogencarbonaten oder Ammoniak vorgenommen werden. Darüber hinaus sind z.B. auch prim., sek. und tert. Amine einsetzbar.

Weiterhin ist bei der Herstellung der erfindungsgemäß einzusetzenden Superabsorber der Einsatz von CoMonomeren möglich. Solche Co-Monomere sind insbesondere als hydrophile oder hydrophobe Monomere befähigt, mit den bereits zuvor genannten Monomeren umgesetzt zu werden, z.B. via Polymerisation, Pfropfen oder andere Methoden.

Die erfindungsgemäß einzusetzenden Superaborber sind vernetzt durch Einsatz von vorzugsweise 0,015 bis 0,1 Mol%, bezogen auf Gesamtmonomer, an Vernetzer. Die Vernetzung ergibt sich durch Bildung kovalenter oder ionischer Bindungen oder durch Bildung anderer attraktiver Wechselwirkungen zwischen den Polymerketten.

Als Vernetzer können insbesondere Verbindungen fungieren, die mindestens zwei polymerisierbare Doppelbindungen aufweisen. Beispiele für Verbindungen dieses Typs sind N,N'-Methylenbisacrylamid, Polyethylenglykoldiacrylate und Polyethylenglykoldi- methacrylate, die sich jeweils von Polyethylenglykolen eines Molekulargewichts von z.B. 106 bis 8500, vorzugsweise 400 bis 2000, ableiten, Trimethylolpropantriacrylat, Tri- methylolpropantrimethacrylat, Ethylenglykoldiacrylat, Ethylenglykoldimethacrylat, Pro- pylenglykoldiacrylat Propylenglykoldimethacrylat, Butandioldiacrylat, Butandioldi- methacrylat, Hexandioldiacrylat, Hexandioldimethacrylat, Allylmethacrylat, Diacrylate und Dimethacrylate von Blockcopolymehsaten aus Ethylenoxid und Propylenoxid, zweifach bzw. mehrfach mit Acrylsäure oder Methacrylsäure veresterte mehrwertige Alkohole, wie Glycerin, Trimethylolpropan oder Pentaerythrit, Triallylamin, Dialkyldially- lammoniumhalogenide wie Dimethyldiallylammoniumchlorid und Diethyldiallylammoni- umchlorid, Tetraallylethylendiamin, Divinylbenzol, Diallylphthalat, Polyethylenglykoldi- vinylether von Polyethylenglykolen eines Molekulargewichtes von z.B. 106 bis 4000, Tri- methylolpropandiallylether, Butandioldivinylether, Pentaerythrittriallylether, Umsetzungsprodukte von 1 Mol Ethylenglykoldiglycidylether oder Polyethylenglykoldiglycidy- lether mit 2 Mol Pentaerythritoltriallylether oder Allylalkohol und/oder Divinylethylen- harnstoff. Vorzugsweise können wasserlösliche Vernetzer eingesetzt werden, beispielsweise N,N'- Methylenbisacrylamid, Polyethylenglykoldiacrylate und Polyethylenglykoldimethacryla- te, Vinylether von Additionsprodukten von z.B. 2 bis 400 Mol Ethylenoxid an 1 Mol eines Diols oder Polyols, Ethylenglykoldiacrylat, Ethylenglykoldimethacrylat, Triacrylate und Trimethacrylate von Additionsprodukten von z.B. 6 bis 20 Mol Ethylenoxid an 1 Mol Glycerin, Trimethylolpropan oder Pentaerythrittriallylether und/oder Divinylhamstoff.

Die Herstellung von Superabsorber durch Polymerisation ist an sich bekannt. Viele geeignete Polymerisationsmethoden um Superabsorber herzustellen sind in aus dem Stand der Technik bekannt, wie insbesondere Sprühpolymerisation, Tropfenpolymerisation, Polymerisation in wässriger Lösung, HIPE-Polymerisation und inverse Suspensionspolymerisation (reverse phase suspension polymerization).

Besonders geeignet für die Zwecke dieser Erfindung sind Superabsorber, die mit Hilfe eines Bandreaktors, wie z.B. in DE3544770 beschrieben, oder in einem Kneter, wie z.B. in WO 03/022896 beschrieben, durch inverse Suspensionspolymerisation, beispielsweise wie beschrieben in EP1609810, oder via Tropfenpolymerisation, wie beispielsweise in der WO2008009598 beschrieben, erhältlich sind.

Polymerisationsinitiatoren zur Verwendung bei der Herstellung der erfindungsgemäß einzusetzenden Superabsorber sind aus dem Stand der Technik bekannt und werden entsprechend der Art der Polymerisation ausgewählt. Bevorzugt werden Radikal-Initiatoren, photolytische Polymerisationsinitiatoren, thermisch zerfallende Polymerisationsinitiatoren und Redoxpolymerisationsinitiatoren und Mischungen davon. Besonders bevorzugt kann zur Herstellung der wasserabsorbierenden Polymergebilde ein Redoxsystem, insbesondere bestehend aus Wasserstoffperoxid, Natriumperoxodisulfat und Ascorbinsäure eingesetzt werden.

Bevorzugte Superabsorber-Herstellprozesse führen zu partikelförmigem superabsorbierenden Polymer. Das resultierende Partikel oder Aggregat hat eine Teilchengröße von vorzugsweise 45 bis 1000 $\mu$m, vorteilhafterweise 45 bis 850 $\mu$m, weiter bevorzugt von 100 bis 800 $\mu$m und insbesondere von 100 bis 700 $\mu$m. Je nach Verfahren kann dieser Partikelgröße direkt bei der Herstellung eingestellt werden oder durch Mahl- und / oder Klassifizierungsverfahren erhalten werden.

Die erfindungsgemäß einzusetzenden Superabsorber können oberflächen- oder nachvernetzt sein, um ihre Leistungsfähigkeit zu verbessern. Diese Art der Vernetzung und ihre Durchführung sind dem Fachmann an sich bekannt. Sie bewirkt dass

Oberflächenvernetzung wird in der Regel durch Zugabe eines organischen oder anorganischen Nachvernetzungsmittels zu der bereits vernetzten Grundpolymerpartikel bewirkt. Es gibt keine besonderen Beschränkungen für das Nachvernetzungsmittel. Bevorzugte Nachvernetzungsmittel sind mehrwertige Alkoholverbindungen, Oxazolidinonverbindungen, Epoxide oder Diglycidylether und Alkylencarbonatverbindungen; Ionen-reaktiven Vernetzungsmittel sind z.B. polyvalente Metallsalze oder Polyamin-Polymere, sowie Kombinationen davon.

Es ist auch bevorzugt, dass das erfindungsgemäß einzusetzende superabsorbierende Polymer einem Nachbehandlungsschritt unterzogen wird, um Anbackungen oder Verklumpungen zu verhindern. Derartige Behandlungen sind in der Technik bekannt und können jederzeit nach der Polymerisation durchgeführt werden, einschließlich vor, während oder nach dem wahlfreien Oberflächennachvernetzungsverfahren. Die Reihenfolge, in der die optionalen Nachbehandlungsmittel zugesetzt werden, unterliegt keiner Beschränkung. Beispiele für Additive, die zur Reduzierung von Anbackungen eingesetzt werden können und/oder andere wünschenswerte Eigenschaften verleihen, umfassen sowohl wasserlösliche als auch wasserunlösliche mehrwertige Metallsalze, wasserlösliche kationische Polymere, anorganische Partikel wie Kieselsäuren, Zeolithe oder Tone, oberflächenaktive Verbindungen, Kohlenwasserstoffe, Thermoplasten und dergleichen.

Die erfindungsgemäß einzusetzenden Superabsorber können ferner zusätzliche Komponenten enthalten, die oft in superabsorbierenden Polymeren vorliegen, wie z.B. wahlweise Biozid, antimikrobielle und / oder antibakteriellen Substanzen, Stabilisatoren, Antioxidantien, Verlaufshilfsmittel , Antistaubmittel, Komplexbildner und / oder weitere Hilfsstoffe.

Es entspricht einer bevorzugten Ausführungsform des erfindungsgemäßen Verfahrens, wenn der zu behandelnde Erz-Aufbereitungsrückstand einen Wassergehalt von 10 bis 90 Gew.-% aufweist, vorzugsweise 10 bis 50 Gew.-%, insbesondere 10 bis 35 Gew.-%.

Es entspricht einer weiteren bevorzugten Ausführungsform des erfindungsgemäßen Verfahrens, wenn der zu behandelnde Erz-Aufbereitungsrückstand einen Feststoffgehalt von 10 bis 90 Gew.-% aufweist, vorzugsweise $\geq$ 60 bis 90 Gew.-%, insbesondere 65 bis 90 Gew.-%.

Die Teilchengröße des erfindungsgemäß einzusetzenden Superabsorbers liegt im Sinne einer weiteren bevorzugten Ausführungsform des erfindungsgemäßen Verfahrens im Bereich von 0,01 bis 5 mm, vorzugsweise 0,1 bis 1 mm.

Erfindungsgemäß werden das komplexe Schubmodul G* und/oder die maximale Belastung durch den Superabsorbereinsatz erhöht. Komplexes Schubmodul G* sowie die maximale Belastung sind etablierte und bekannte rheometrische Kenngrößen.

Module beschreiben generell das Verhältnis aus Kraft zu entstehender Verformung. Materialien mit hohen Modulen lassen sich mit gegebener Kraft weniger stark deformieren bzw. müssen um eine gewisse Deformation zu erziehen, mit einer größeren Kraft belastet werden. Module sind Materialkonstanten, die unter bestimmten Bedingungen (z. B. angelegte Kraft) bestimmt werden. Materialien können bei unterschiedlichen Belastungen unterschiedliche Deformation aufweisen. Die Module werden durch Durchführung von Oszillationsmessungen mit einem Rheometern bestimmt.

Die Kraft mit der die Probe belastet wird kann nicht beliebig groß werden. Ab einer bestimmten Kraft wird die in die Probe eingebrachte Kraft (bzw. Energie) in Deformationsenergie umgesetzt und es kommt zu einem makroskopischen Fließen der Probe. Da diese Messung in Oszillation (Sinus Funktion) durchgeführt wurde, bedeutet das, dass die Probe einer periodischen Belastung unterliegt. Durch die periodische Belastung, die üblicherweise im Sekundenbereich liegt, wird ein Teil der Kraft zum Abstoppen der fließenden Probe benutzt, bevor die übrige Kraft für den Rest der Schwingungsperiode die Probe erneut in die Gegenrichtung beschleunigt. Da die Zeit durch die Dauer der Schwingungsperiode begrenzt ist, kann die Probe immer nur auf eine bestimmte maximale Geschwindigkeit beschleunigt werden. Daher ist die Kraft, die maximal auf eine Probe in einem Oszillationsversuch lasten kann, begrenzt. Diese maximale Kraft setzt sich zusammen aus der Stärke der Struktur in einer Probe und der Kraft die nötig ist, um eine für eine bestimmte Zeitperiode fließende Probe abzubremsen und erneut zu beschleunigen. Werden unterschiedliche Proben gleicher Massen verglichen ist die maximal erreichbare Belastung ein Maß für die in der Probe herrschende Struktur.

Anders als die Belastung in Oszillation ist die (Scher-)Belastung in Rotation unbegrenzt möglich, da die Probe in Rotation nicht durch den bei der Oszillation zwangsläufigen Richtungswechsel abgebremst wird.

Aus rheologischen Messungen kann das komplexe Schubmodul G* erhalten werden. Der komplexe Schubmodul G* beschreibt in der Schwingungsrheometrie das Verhalten viskoelastischer Körper bei einer oszillierenden (sinusförmigen) Scherbelastung. Er verknüpft die auf die Probe einwirkende sinusförmige Schubspannung $\gamma(t)$ mit der resultierenden Scherdeformation $\gamma(t)$. Die Frequenz mit der die Schwingung durchgeführt wird beträgt 1 Hz.

$$G^* = \tau(t) / \gamma(t)$$

Durch einen höheren Wert des komplexen Schubmoduls G* und / oder eine Steigerung der maximalen Belastbarkeit (maximale Belastung) werden die Eigenschaften in der Art geändert, dass z.B. eine signifikante Erhöhung des "beach slope" ermöglicht wird, so dass pro Flächeneinheit deutlich mehr Masse abgelagert werden kann. "Beach slope" ist ein feststehender Fachbegriff im Zusammenhang mit Tailings. Tailings bilden eine Oberflächenneigung aus, nachdem sie von einem Abgabeort abgelassen werden. Die Einheit für den gebildeten Neigungswinkel wird in % angegeben. Je höher der Prozentwert ist, desto steiler ist die Neigung. Der Wert kann insbesondere zwischen 0,4 bis 20 % liegen. Höhere Neigungswerte werden angestrebt, um eine raumeffiziente Ablagerung zu ermöglichen.

Die Messungen des komplexen Schubmoduls werden im Rahmen dieser Erfindung insbesondere durch eine periodisch oszillierende Bewegung der Messgeometrie in der Probe durchgeführt. Die Frequenz dieser Schwingung liegt typischerweise im Bereich von 1 Hz. Die Größe der Belastungen bewegt sich normalerweise über mehrere Größenordnungen. Eine makroskopische Bewegung der Messgeometrie bei einer bestimmten Belastung bedeutet, dass die in die Probe eingebrachte Energie in Deformationsenergie umgesetzt wurde. Durch die Deformation wird die innere Struktur der Probe zerstört und es kann nur noch wenig Deformationsenergie gespeichert werden, so dass die an die Probe angelegte Belastung zur vollständigen Bewegung der Probe führt. Die zur vollständigen Bewegung der Probe benötigte Belastung kann kleiner sein als die Belastung die vom Operator eingestellt worden ist, das Rheometer kann folglich diese Belastung nicht an die Probe übertragen. Das Nicht-Erreichen einer hohen Belastung zeigt somit an, dass die Materialeigenschaften der Probe nicht ausreichend sind, um diese Belastung aufzunehmen. Proben, bei denen keine hohen Belastungen erreicht werden konnten bzw. deren Module bei hohen Belastungen sehr klein wurden, zeichnen sich durch eine niedrigen beach slope aus.

**Testmethoden**

Im Rahmen der vorliegenden Erfindung wurde auf die nachfolgend beschriebenen Testmethoden zurückgegriffen.

Es wurde ein MCR 302 Rheometer der Firma Anton Paar, Graz, für die Messungen verwendet. Es wurde eine Peltier-Temperierung für Zylinder-Messsysteme (C-PTD 200) als Aufnahme für Einmalzylinder benutzt, als Geometrie wurde die Geometrie ST 24-2D-12/109 verwendet. Diese Geometrie erinnert an einen Flügelrührer und besteht aus einer 107.45 mm langen Achse an deren Ende zwei 12 mm x 12 mm große Bleche im Winkel von 45° angesetzt sind. Die Messtemperatur betrug 25°C. 50 (+/- 1) Gramm der aufgeschüttelten Proben wurden in die Einmalzylinder gefüllt, mehrmals mit einem Spatel verrührt um eventuell vorhandene Luftblasen zu zerstören. Nach 5 Minuten wurde die Probe in das Peltier-Element eingesetzt. Anschließend wurde die Messgeometrie auf die durch die Software anwählbare niedrigste Position gefahren.

Anschließend wurde folgendes Messprogramm gestartet:

1.: Anlegung einer (Scher-)Schubspannung von 1000 Pascal mit 2 Messpunkten, 5 Sekunden pro Messpunkt
2.: Nach einer Wartezeit von 50 Sekunden wurde Schubspannungsrampe von 1 - 1000 Pascal und einer Frequenz von 1 Hz mit 31 Messpunkten (logarithmische Skalierung) angelegt, 5 Sekunden pro Messpunkt. Der erste Teil des Messprogrammes hatte zur Aufgabe, den Proben immer die gleiche Vorbehandlung zu geben und eventuell durch Sedimentation auftretende Effekte zu egalisieren. Die Messungen wurde in Rotation durchgeführt. Alle gemessenen Proben zeigten die Ausbildung einer Trombe (Vortex), was für eine gute und vollständige Durchmischung der Probe ähnlich wie sie es beim Pumpen durch Rohren erfahren würde, spricht.

Der zweite Teil des Messprogrammes prüft die Eigenschaften der Probe hinsichtlich der Verformbarkeit bei verschiedenen, steigenden Belastungen. Keine der untersuchten Proben konnten mit Belastung von 1000 Pascal belastet werden, da alle Proben bei bereits kleineren Belastungen vollständig flossen. Es wurde das komplexe Schubmodul sowie die maximale Belastung (entspricht der maximal erreichbaren Schubspannung) zur Auswertung herangezogen.

Die Zugabe des Superabsorbers erfolgte, indem das Polymer in die Einmalhülsen eingewogen wurde und anschließend 50 (+/- 1) Gramm der aufgeschüttelten Probe dazugegeben worden. Die Probe wurde mit einem Spatel vermengt, nach 5 Minuten in das Peltier-Element eingesetzt und mit dem Messprogramm begonnen.

Das komplexe Schubmodul wurde bei verschiedenen Schubspannungsbelastungen (Oszillationsschubspannung) ausgewertet. Außerdem wurden die maximal erreichten Schubspannungsbelastungen (maximale Belastung), mit denen die Proben belastet wurden, notiert.

Das erfindungsgemäße Verfahren sieht die Behandlung von wasserhaltigen Erz-Aufbereitungsrückständen mit speziellem Superabsorber vor, wie zuvor beschrieben.

Dabei kann der Erz-Aufbereitungsrückstand z.B. stufenweise oder im Sinne einer one-shot-Zugabe mit dem Superabsorber behandelt werden.

Es entspricht einer bevorzugten Ausführungsform der Erfindung, wenn die wasserhaltigen Erz-Aufbereitungsrückstände stufenweise mit Superabsorber behandelt werden, indem man z.B. eine erste Menge Superabsorber am Anfang des Transportprozesses, der z.B. durch Pumpen erfolgt, hinzugibt, entsprechend Stufe 1, und dann unmittelbar vor dem Ausbringen auf die Lagerstätte erneut Superabsorber hinzugibt, entsprechend Stufe 2. Es liegen also zumindest 2 Zugabeorte und/oder Zugabezeitpunkte vor.

Möglich ist es z.B., einen Teil des Superabsorber am Anfang der Pipeline in den sog. "Sucktion"-Teil zuzugeben und den Rest am Ende der Pipeline.

Wenn die Tailings durch Pipelines gepumpt werden, kann der Superabsorber z.B. einfach in den Flüssigkeitsstrom eindosiert werden. Bevorzugt wird dies kurz vor dem Austritt aus der Pipeline in die Lagerstätte (Endstück der Pipeline) des optional verdickten Tailings durchgeführt. Die Turbulenzen, insbesondere beim Ausbringen in die Lagerstätte, reichen aus, um das Polymer zu verteilen. Insbesondere oberflächenbehandelte Superabsorber lassen sich leicht dispergieren. Dadurch entfällt ein gesonderterr Mischvorgang. Natürlich kann der Superabsorber auch mit einem Mischer untergemischt werden.

Für die Zugabe des Superabsorber zum Tailing sind z.B. folgende Varianten möglich, die jeweils bevorzugten Ausführungsformen der Erfindung entsprechen:

a) Über einen bypass der Pipeline: Dort kann der Druck sehr gut kontrolliert werden und der Superabsorber kann z.B. mit einer Dosierschnecker eindosiert werden. Dann wird das behandelte Tailing wieder dem Pipelinestrom zugefügt. Der Vorteil ist, das eine relativ kleine Pumpe für den Bypass benötigt wird.

b) Die Pipeline wird unterbrochen und das Tailing läuft in einen Beschickungtrichter (feed hopper), in dem der Superabsorber eindosiert und eingemischt wird. Dann wird das Tailing weitergepumpt.

c) Der Superabsorber kann mit Druckluft in die Pipeline eindosiert werden.

d) Der Superabsorber kann in der "sucktion side" eindosiert werden.

Ein weiterer Gegenstand der Erfindung sind Gemische nach Anspruch 6.

Offenbart werden auch Gemische, umfassend Erz-Aufbereitungsrückstände und Superabsorber, insbesondere wie zuvor definiert, wobei das Gemisch ein komplexes Schubmodul $G^* \geq 550$ Pa, vorzugsweise $\geq 825$ Pa, insbesondere $\geq 1100$ Pa bei einer Schubspannungsbelastung von 1 Pa aufweist, wobei das komplexe Schubmodul $G^*$ nach der hierin definierten Methode bestimmt wird, und/oder eine maximale Belastung im Bereich von $\geq 40$ Pa, vorzugsweise $\geq 100$ Pa, insbesondere $\geq 150$ Pa aufweist, wobei die maximale Belastung nach der hierin definierten Methode bestimmt wird, und wobei der Superabsorber in einpolymerisierter Form

a) mindestens 50 Mol-% bezogen auf den Superabsorber eines oder mehrerer monoethylenisch ungesättigte, Säuregruppen enthaltende Monomere, wobei der Neutralisationsgrad der monoethylenisch ungesättigten, Säuregruppen enthaltenden Monomere 15 bis 85 Mol-% beträgt und

b) vorzugsweise 0,015 bis 0,1 Mol-% bezogen auf die Gesamtmenge Monomere mindestens eines Vernetzers, sowie

c) gegebenenfalls ein oder mehrere ethylenisch und/oder allylisch ungesättigte Monomere, die von den Monomeren a) verschieden sind und mit ihnen copolymerisierbar sind,

enthält, wobei der Superabsorber gegebenenfalls oberflächenbehandelt ist, vorzugsweise unter Einsatz von Antibackmittel und/oder Fließhilfsmittel, sowie vorzugsweise oberflächenvernetzt ist,

enthält.

Gemäß einer bevorzugten Ausführungsform weist das erfindungsgemäße Gemisch einen beach slope von 1 - 45%, vorzugsweise 1 - 20% auf.

Ein weiterer Gegenstand der Erfindung ist ein Verfahren nach Anspruch 8.

Offenbart wird auch ein Verfahren zur Lagerung von Erz-Aufbereitungsrückständen in übertägigen Rückstandsspeicher, wobei dem Erz-Aufbereitungsrückständen während der Zugabe in den Rückstandsspeicher oder in einem Zeitraum von maximal 5 Stunden vor der Zugabe in den Rückstandsspeicher Superabsorber beigemengt wird, wobei der Superabsorber in einpolymerisierter Form

a) mindestens 50 Mol-% bezogen auf den Superabsorber eines oder mehrerer monoethylenisch ungesättigte, Säuregruppen enthaltende Monomere, wobei der Neutralisationsgrad der monoethylenisch ungesättigten, Säuregruppen enthaltenden Monomere 15 bis 85 Mol-% beträgt und

b) vorzugsweise 0,015 bis 0,1 Mol-% bezogen auf die Gesamtmenge Monomere mindestens eines Vernetzers, sowie

c) gegebenenfalls ein oder mehrere ethylenisch und/oder allylisch ungesättigte Monomere, die von den Monomeren a) verschieden sind und mit ihnen copolymerisierbar sind,

enthält, wobei der Superabsorber gegebenenfalls oberflächenbehandelt ist, vorzugsweise unter Einsatz von Antibackmittel und/oder Fließhilfsmittel, sowie vorzugsweise oberflächenvernetzt ist.

Weitere Gegenstände der Erfindung sind Verwendungen nach den Ansprüchen 9 bis 12.

Offenbart wird die Verwendung von Superabsorber, insbesondere wie zuvor beschrieben, zur Verbesserung des Trocknungsverhalten von wasserhaltigen Erz-Aufbereitungsrückständen, zur Verbesserung der Lagereigenschaften von wasserhaltigen Erz-Aufbereitungsrückständen, insbesondere zur Verbesserung der Lagereigenschaften hinsichtlich der Abwehr von Abtragung der Erz-Aufbereitungsrückständen durch Wind und/oder Wasser im Zusammenhang mit der Umwelteinflüssen, sowie zur Verbesserung des Transportverhaltens von wasserhaltigen Erz-Aufbereitungsrückständen.

Ein weiterer Gegenstand der Erfindung ist die Verwendung von Superabsorber, insbesondere wie zuvor beschrieben, zur Unterdrückung der Staubbildung von Erz-Aufbereitungsrückständen.

Ein weiterer Gegenstand der Erfindung ist die Verwendung von Superabsorber, insbesondere wie zuvor beschrieben, zur Reduktion der Krustenbildung bei der Trocknung von wasserhaltigen Erz-Aufbereitungsrückständen.

**Beispiele**

Superabsorber Polymer A

In 985,67 g einer wässrigen Lösung aus Acrylsäure mit einem Neutralisationsgrad von 74 mol%, (321,7g glaciale Acrylsäure in 253,26g deionisiertem Wasser, neutralisiert mit 410,72 g 32% wässriger Natronlauge, wurden 0,925 g Trimethylolpropan-triacylat (ethoxyliert) (0,20% bezogen auf Acrylsäure; Estergehalt=69,2%) und 1,407 g Polyethylenglycol--monoallyletheracrylat (0,40% bezogen auf Acrylsäure; Estergehalt entsprechend 91%) als Vernetzer gelöst. Die Monomerenlösung wurde in einem Kunststoff-Polymerisationsgefäß für 30 Minuten mit Stickstoff durchgespült, um den gelösten Sauerstoff zu entfernen. Bei einer Temperatur von 4 °C wurde die Polymerisation durch die aufeinanderfolgende Zugabe von 0,3 g Natriumperoxodisulfat in 4,7 g dest. Wasser, 0,07 g 35 %ige Wasserstoffperoxidlösung in 4,93 g dest. Wasser und 0,015 g Ascorbinsäure in 1,985 g dest. Wasser gestartet. Dreißig Minuten nachdem die Endtemperatur (ca. 100 °C) erreicht war, zerkleinerte man das Gel mit einem Fleischwolf und trocknete 2 h bei 150 °C in einem Umlufttrockenschrank. Das getrocknete Vorprodukt wurde grob zerstoßen, gemahlen und auf ein Pulver 1 mit einer Partikelgröße von 150 mm bis 600 mm gesiebt.

Superabsorber Polymer B

Das oben erhaltenen Pulver 1 wurde konfektioniert unter kräftigen Rühren mit 500 ppm Polyethylenglykol (Molgewicht 300), 2200 ppm Silica (Sipernat 22s, Evonik) und 5000 ppm dest. Wasser. Das so erhaltene, nicht-oberflächennachvernetzte, wasserabsorbierende Polymergebilde (Pulver A) hatte eine mittlere Teilchengrösse nach EDANA ERT 420.2-02 von 390 mm.

Superabsorber Polymer C

Hergestellt wie Superabsorber Polymer A, wobei die finale Konfektionierung mit 1.5 Gew.-t% Kaolin-Pulver durchgeführt (0,1 - 4 $\mu$m, CAS -No. 1332-58-7, Sigma-Aldrich) wurde (dry blending).

Superabsorber Polymer D

Eine Monomerlösung bestehend aus 640 g Acrylsäure, die zu 70 Mol-% mit Natronlauge neutralisiert wurde (497,36 g 50%ige NaOH), 825,06 g Wasser, 2,102 g Polyethylenglykol-300-diacrylat (76,1 %ig) und 4,010 g Polyethylenglykolmonoallylether (79,8 %ig, Molekulargewicht etwa 440 g/mol) wurde durch Spülen mit Stickstoff vom gelösten Sauerstoff befreit und auf die Starttemperatur von 4°C abgekühlt. Nach Erreichen der Starttemperatur wurde die Initiatorlösung (0,8 g Natriumperoxydisulfat in 10 g $H_2O$, 0,6 g 35 %ige Wasserstoffperoxid-Lösung in 10 g $H_2O$ und 0,06 g Ascorbinsäure in 10 g $H_2O$) zugesetzt. Nachdem die Endtemperatur von ca. 100 °C erreicht war, wurde das entstandene Gel mit einem Fleischwolf zerkleinert und bei 150°C 2 Stunden lang im Trockenschrank getrocknet. Das getrocknete Polymerisat wurde grob zerstoßen, mittels einer Schlagkranzmühle (Firma Retsch ZMI) mit einem 5 mm-Sieb gemahlen und auf ein Pulver mit einer Partikelgröße von 150 bis 800 μm gesiebt.

Zur Nachvernetzung wurden 100 Teile des gerade erhaltenen Pulver unter kräftigen Rühren mit einer Lösung aus 1 Teil 1,3-Dioxolan-2-on, 3g Wasser vermischt und anschliessend für 30 Minuten auf 180°C erhitzt. Das so erhaltene, oberflächennachvernetzte, wasserabsorbierende Polymergebilde (Pulver D) hatte eine mittlere Teilchengrösse nach EDANA ERT 420.2-02 von 460 mm.

Die nachfolgend genannten Eisen-Erzaufbereitungsrückstände A wurden von einer Minengesellschaft zur Verfügung gestellt.

Beispiel 1

50 g Eisenerzaufbereitungsrückstand A mit 65 Gew.-% Feststoffgehalt, umfassend 0,1Gew.-% lineares Polyacrylamid (Kemira N-100) als Reibungsminderer wurden mit 0,035g Superabsorber A vermischt.

Beispiel 2

50 g Eisenerzaufbereitungsrückstand A mit 61 Gew.-% Feststoffgehalt, wurden mit 0,04g Superabsorber A vermischt.

Beispiel 3

50 g Eisenerzaufbereitungsrückstand A mit 66 Gew.-% Feststoffgehalt, wurden mit 0,035g Superabsorber A vermischt.

Beispiel 4

50 g Eisenerzaufbereitungsrückstand A mit 60 Gew.-% Feststoffgehalt, wurden mit 0,045g Superabsorber A vermischt.

Vergleichsbeispiel 1

50 g Eisenerzaufbereitungsrückstand A mit 65 Gew.-% Feststoffgehalt, umfassend 0,1Gew.-% lineares Polyacrylamid (Kemira N-100) (entspricht Bsp. 1 ohne Superaborber)

Vergleichsbeispiel 2

50 g Eisenerzaufbereitungsrückstand A mit 61 Gew.-% Feststoffgehalt (entspricht Bsp. 2 ohne Superaborber)

Vergleichsbeispiel 3

50 g Eisenerzaufbereitungsrückstand A mit 66 Gew.-% Feststoffgehalt. (entspricht Bsp. 3 ohne Superaborber)

Vergleichsbeispiel 4

50 g Eisenerzaufbereitungsrückstand A mit 60 Gew.-% Feststoffgehalt. (entspricht Bsp. 4 ohne Superaborber)

Tabelle 1

| | Feststoffgehalt | ReibungsMinderer | SAP | G*/ Pa (1 Pa Belastung) | % Änderung (1Pa Belastung) | G*/Pa (10 Pa Belastung) | % Änderung (10 Pa Belastung) | G*/Pa (100 Pa Belastung) | maximale Belastung/Pa | % Änderung |
|---|---|---|---|---|---|---|---|---|---|---|
| Vergleichsbeispiel 1 | 65% | + | - | 1640 | - | 510 | - | nicht messbar | 87,97 | - |
| Beispiel 1 | 65% | + | SAP A | 3130 | 91% | 2100 | 312% | 32,7 | 184,6 | 110% |
| Vergleichsbeispiel 2 | 61% | - | - | 2530 | - | 1460 | - | nicht messbar | 98,63 | - |
| Beispiel 2 | 61% | - | SAP A | 2800 | 11% | 2060 | 41% | 10,4 | 129,2 | 31% |
| Vergleichsbeispiel 3 | 66% | - | - | 1700 | - | 81,4 | - | nicht messbar | 66,61 | - |
| Beispiel 3 | 66% | - | SAP A | 2950 | 74% | 1500 | 1743% | 6,6 | 137,8 | 107% |
| Vergleichsbeispiel 4 | 60% | - | - | 789 | - | 254 | - | nicht messbar | 51,7 | - |
| Beispiel 4 | 60% | - | SAP A | 1240 | 57% | 504 | 98,40% | nicht messbar | 66,9 | 29% |

Beispiel 5

50 g Eisenerzaufbereitungsrückstand A mit 60 Gew.-% Feststoffgehalt, wurden mit 0,040g Superabsorber D vermischt.

Beispiel 6

50 g Eisenerzaufbereitungsrückstand A mit 60 Gew.-% Feststoffgehalt, wurden mit 0,040g Superabsorber A vermischt.

Beispiel 7

50 g Eisenerzaufbereitungsrückstand A mit 60 Gew.-% Feststoffgehalt, wurden mit 0,040g Superabsorber B vermischt.

Beispiel 8

50 g Eisenerzaufbereitungsrückstand A mit 60 Gew.-% Feststoffgehalt, wurden mit 0,040g Superabsorber C vermischt.

Tabelle 2

| | Feststoffgehalt | ReibungsMinderer | SAP | G*/Pa (1 Pa Belastung) | % Änderung (1 Pa Belastung) | G*/Pa (10 Pa Belastung) | % Änderung (10 Pa Belastung) | maximale Belastung/Pa | % Änderung |
|---|---|---|---|---|---|---|---|---|---|
| Vergleichsbeispiel 4 | 60% | - | - | 789 | - | 254 | - | 51,7 | - |
| Beispiel 4 | 60% | - | SAP A | 1240 | 57% | 504 | 98% | 66,9 | 29% |
| Beispiel 5 | 60% | - | SAP D | 1210 | 53% | 595 | 134% | 87 | 68% |
| Beispiel 6 | 60% | - | SAP A | 1370 | 74% | 660 | 160% | 77,7 | 50% |
| Beispiel 7 | 60% | - | SAP B | 1440 | 83% | 732 | 188% | 84,9 | 64% |
| Beispiel 8 | 60% | - | SAP C | 1560 | 98% | 836 | 229% | 84,5 | 63% |

Die nachfolgend genannten Nickel-Erzaufbereitungsrückstände A wurden von einer Minengesellschaft zur Verfügung gestellt.

Vergleichsbeispiel 5

50 g Nickelerzaufbereitungsrückstand A mit 50 Gew.-% Feststoffgehalt

Beispiel 9

50 g Nickelerzaufbereitungsrückstand A mit 50 Gew.-% Feststoffgehalt, wurden mit 0,040g Superabsorber A vermischt.

Tabelle 3

| | Feststoffgehalt | SAP | G*/Pa (1 Pa Belastung) | % Änderung (1 Pa Belastung) | G*/Pa (4 Pa Belastung) | % Änderung (4 Pa Belastung) | G*/Pa (9 Pa Belastung) | % Änderung (9 Pa Belastung) | maximale Belastung/Pa | % Änderung |
|---|---|---|---|---|---|---|---|---|---|---|
| Vergleichsbeispiel 5 | 50% | - | 26,9 | - | 8,16 | - | 0,57 | | 16,7 | - |
| Beispiel 9 | 50% | SAP A | 86,2 | 220% | 21,3 | 161% | 1% | 86% | 19,2 | 15% |

Eine weitere Serie von Eisenerzaufbereitungsrückständen mit unterschiedlichen Feststoffgehalten wurde von einer weiteren Mine erhalten. Diese werden im Folgen als Eisenerzaufbereitungsrückstände B bezeichnet.

Beispiel 10

35 g Eisenerzaufbereitungsrückstand B mit 60 Gew.-% Feststoffgehalt, wurden mit 0,050g Superabsorber A vermischt.

Beispiel 11

35 g Eisenerzaufbereitungsrückstand B mit 65 Gew.-% Feststoffgehalt, wurden mit 0,050g Superabsorber A vermischt.

Beispiel 12

35 g Eisenerzaufbereitungsrückstand B mit 70 Gew.-% Feststoffgehalt, wurden mit 0,050g Superabsorber A vermischt.

Vergleichsbeispiel 6

35 g Eisenerzaufbereitungsrückstand B mit 60 Gew.-% Feststoffgehalt

Vergleichsbeispiel 7

35 g Eisenerzaufbereitungsrückstand B mit 65 Gew.-% Feststoffgehalt

Vergleichsbeispiel 8

35 g Eisenerzaufbereitungsrückstand B mit 70 Gew.-% Feststoffgehalt

Tabelle 4

| | Feststoffgehalt | SAP | G*/Pa (1Pa Belastung) | % Änderung (1Pa Belastung) | G*/Pa (4 Pa Belastung) | % Änderung (4 Pa Belastung) | G*/Pa (10 Pa Belastung) | % Änderung (10 Pa Belastung) | maximale Belastung/Pa | % Änderung |
|---|---|---|---|---|---|---|---|---|---|---|
| Vergleichsbeispiel 6 | 60% | - | 1,4 | - | 0,12 | - | - | - | 5 | - |
| Beispiel 10 | 60% | SAP A | 754 | 53757% | 4,23 | 3425% | - | - | 9,4 | 88% |
| Vergleichsbeispiel 7 | 65% | - | 701 | - | 5,8 | - | 1,4 | - | 36,1 | - |
| Beispiel 11 | 65% | SAP A | 2707 | 286% | 1543,5 | 26512% | 24,5 | 1650% | 57,7 | 60% |
| Vergleichsbeispiel 8 | 70% | - | 4090 | - | 3,2 | - | 2,1 | - | 55,3 | - |
| Beispiel 12 | 70% | SAP A | 26900 | 558% | 9890 | 308963% | 2,9 | 36% | 61,6 | 11% |

Beispiel 13

50 g Eisenerzaufbereitungsrückstand B mit 75 Gew.-% Feststoffgehalt, wurden mit 0,050g Superabsorber A vermischt.

Vergleichsbeispiel 9

50 g Eisenerzaufbereitungsrückstand B mit 75 Gew.-% Feststoffgehalt

Tabelle 5

| | Feststoffgehalt | SAP | G*/Pa (20 Pa Belastung) | % Änderung (20 Pa Belastung) | G*/Pa (40 Pa Belastung) | % Änderung (40 Pa Belastung) | G*/Pa (100 Pa Belastung) | % Änderung (100 Pa Belastung) | maximale Belastung/Pa | % Änderung |
|---|---|---|---|---|---|---|---|---|---|---|
| Vergleichsbeispiel 9 | 75% | - | 1800 | | 154 | | 20,2 | | 291 | |
| Beispiel 13 | 75% | SAP A | 3126 | 74% | 872 | 466% | 127,5 | 531% | 824 | 183% |

**Patentansprüche**

1. Verfahren zur Behandlung von wasserhaltigen Erz-Aufbereitungsrückständen mit Superabsorber

   • zur Erhöhung des komplexen Schubmoduls G* bei einer Schubspannung von 1 Pa um mindestens 10% gegenüber dem unbehandelten Erz-Aufbereitungsrückstand,
   wobei der Wert des komplexen Schubmoduls G* des unbehandelten Erz-Aufbereitungsrückständes bei einer Schubspannungsbelastung von 1 Pa mindestens 500 Pa beträgt,
   wobei das komplexe Schubmodul G* nach der in der Beschreibung im Abschnitt "Testmethoden" definierten Methode bestimmt wird,
   und
   • zur Erhöhung der maximalen Belastung um mindestens 10 % gegenüber dem unbehandelten Erz-Aufbereitungsrückstand,

   wobei der Wert der maximalen Belastung des unbehandelten Erz-Aufbereitungsrückständes mindestens 25 Pa beträgt,
   wobei die maximale Belastung nach der in der Beschreibung im Abschnitt "Testmethoden" definierten Methode bestimmt wird,
   bei welchem dem Erz-Aufbereitungsrückstand der Superabsorber in Mengen von 0,001 bis 10 Gew. -% zugegeben wird,
   wobei der Superabsorber in einpolymerisierter Form

   a) mindestens 50 Mol-% bezogen auf den Superabsorber ein oder mehrere monoethylenisch ungesättigte, Säuregruppen enthaltende Monomere, wobei der Neutralisationsgrad der monoethylenisch ungesättigten, Säuregruppen enthaltenden Monomere 15 bis 85 Mol-% beträgt,
   und
   b) 0,015 bis 0,1 Mol-% bezogen auf die Gesamtmenge Monomere mindestens eines Vernetzers,

   enthält,
   und wobei der Superabsorber oberflächenvernetzt ist.

2. Verfahren nach Anspruch 1, **dadurch gekennzeichnet, dass** der zu behandelnde Erz-Aufbereitungsrückstand einen Wassergehalt von 5 bis 90 Gew.-% aufweist.

3. Verfahren nach einem der Ansprüche 1 bis 2, **dadurch gekennzeichnet, dass** die Teilchengröße des Superabsorbers im Bereich von 0,01 bis 5 mm liegt.

4. Verfahren nach einem der Ansprüche 1 bis 3, **dadurch gekennzeichnet, dass** der Erz-Aufbereitungsrückstand zumindest zu 50 Gew.-%, bezogen auf sein Gesamtgewicht, Kornfraktionen im Bereich zwischen 2$\mu$m und 2mm aufweist.

5. Gemisch, umfassend Erz-Aufbereitungsrückstände und Superabsorber, wobei das Gemisch

   • ein komplexes Schubmodul G* $\geq$ 550 Pa bei einer Schubspannungsbelastung von 1 Pa aufweist,
   wobei das komplexe Schubmodul G* nach der in der Beschreibung im Abschnitt "Testmethoden" definierten Methode bestimmt wird,
   und/oder
   • eine maximale Belastung im Bereich von $\geq$40 Pa aufweist,

   wobei die maximale Belastung nach der in der Beschreibung im Abschnitt "Testmethoden" definiertenMethode bestimmt wird,
   und wobei der Superabsorber in einpolymerisierter Form

   a) mindestens 50 Mol-% bezogen auf den Superabsorber ein oder mehrere monoethylenisch ungesättigte, Säuregruppen enthaltende Monomere, wobei der Neutralisationsgrad der monoethylenisch ungesättigten, Säuregruppen enthaltenden Monomere 15 bis 85 Mol-% beträgt,
   und
   b) 0,015 bis 0,1 Mol-% bezogen auf die Gesamtmenge Monomere mindestens eines Vernetzers, enthält,

und wobei der Superabsorber oberflächenvernetzt ist.

6.   Gemisch nach Anspruch 5, **dadurch gekennzeichnet, dass** es einen beach slope von 1-20% aufweist.

7.   Verfahren zur Lagerung von Erz-Aufbereitungsrückständen in einem übertägigen Rückstandsspeicher, wobei dem Erz-Aufbereitungsrückständen während der Zugabe in den Rückstandsspeicher oder in einem Zeitraum vor der Zugabe in den Rückstandsspeicher Superabsorber beigemengt wird,
wobei der Superabsorber in einpolymerisierter Form

  a) mindestens 50 Mol-% bezogen auf den Superabsorber ein oder mehrere monoethylenisch ungesättigte, Säuregruppen enthaltende Monomere, wobei der Neutralisationsgrad der monoethylenisch ungesättigten, Säuregruppen enthaltenden Monomere 15 bis 85 Mol-% beträgt,
  und
  b) 0,015 bis 0,1 Mol-% bezogen auf die Gesamtmenge Monomere mindestens eines Vernetzers,

enthält,
und wobei der Superabsorber oberflächenvernetzt ist.

8.   Verwendung von Superabsorber, wie in einem der vorigen Ansprüche definiert, zur Verbesserung des Trocknungsverhaltens von wasserhaltigen Erz-Aufbereitungsrückständen.

9.   Verwendung von Superabsorber, wie in einem der vorigen Ansprüche definiert, zur Verbesserung der Lagereigenschaften von wasserhaltigen Erz-Aufbereitungsrückständen.

10.   Verwendung von Superabsorber, wie in einem der vorigen Ansprüche definiert, zur Verbesserung des Transportverhaltens von wasserhaltigen Erz-Aufbereitungsrückständen.

11.   Verwendung von Superabsorber, wie in einem der vorigen Ansprüche definiert, zur Reduktion der Krustenbildung bei der Trocknung von wasserhaltigen Erz-Aufbereitungsrückständen.


**Claims**

1.   Process for treating water-containing ore beneficiation residues with superabsorbents

  • in order to increase the complex shear modulus G* at a shear stress of 1 Pa by at least 10% compared to the untreated ore beneficiation residue,
  wherein the value of the complex shear modulus G* of the untreated ore beneficiation residue at a shear stress loading of 1 Pa is at least 500 Pa,
  wherein the complex shear modulus G* is determined by the method defined in the description in the "test methods" section,
  and
  • in order to increase the maximum load by at least 10% compared to the untreated ore beneficiation residue,

wherein the value of the maximum load on the untreated ore beneficiation residue is at least 25 Pa,
wherein the maximum load is determined by the method defined in the description in the "test methods" section,
in which the super absorbent is added to the ore beneficiation residue in amounts of from 0.001 to 10% by weight,
wherein the superabsorbent contains, in copolymerized form,

  a) at least 50 mol% based on the superabsorbent of one or more monoethylenically unsaturated monomers containing acid groups, wherein the degree of neutralization of the monoethylenically unsaturated monomers containing acid groups is from 15 to 85 mol%, and
  b) from 0.015 to 0.1 mol% based on the total amount of monomers of at least one crosslinker,

and wherein the superabsorbent is surface-crosslinked.

2.   Process according to Claim 1, **characterized in that** the ore beneficiation residue to be treated has a water content of from 5 to 90% by weight.

3. Process according to either of Claims 1 and 2, **characterized in that** the particle size of the superabsorbent is in the range from 0.01 to 5 mm.

4. Process according to one of Claims 1 to 3, **characterized in that** the ore beneficiation residue has at least 50% by weight, based on its total weight, of particle size fractions in the range from 2 μm to 2 mm.

5. Mixture comprising ore beneficiation residues and superabsorbents, wherein the mixture

   • has a complex shear modulus G* of ≥ 550 Pa at a shear stress load of 1 Pa,
   wherein the complex shear modulus G* is determined by the method defined in the description in the "test methods" section,
   and/or
   • has a maximum load in the range of ≥ 40 Pa, wherein the maximum load is determined by the method defined in the description in the "test methods" section,

   and wherein the superabsorbent contains, in copolymerized form,

   a) at least 50 mol% based on the superabsorbent of one or more monoethylenically unsaturated monomers containing acid groups, wherein the degree of neutralization of the monoethylenically unsaturated monomers containing acid groups is from 15 to 85 mol%, and
   b) from 0.015 to 0.1 mol% based on the total amount of monomers of at least one crosslinker,

   and wherein the superabsorbent is surface-crosslinked.

6. Mixture according to Claim 5, **characterized in that** it has a beach slope of 1-20%.

7. Method of storing ore beneficiation residues in an above-ground residue store, wherein superabsorbent is mixed into the ore beneficiation residues during introduction into the residue store or within a period before introduction into the residue store,
   wherein the superabsorbent contains, in copolymerized form,

   a) at least 50 mol% based on the superabsorbent of one or more monoethylenically unsaturated monomers containing acid groups, wherein the degree of neutralization of the monoethylenically unsaturated monomers containing acid groups is from 15 to 85 mol%, and
   b) from 0.015 to 0.1 mol% based on the total amount of monomers of at least one crosslinker,

   and wherein the superabsorbent is surface-crosslinked.

8. Use of superabsorbents, as defined in any of the preceding claims, for improving the drying behavior of water-containing ore beneficiation residues.

9. Use of superabsorbents, as defined in any of the preceding claims, for improving the storage properties of water-containing ore beneficiation residues.

10. Use of superabsorbents, as defined in any of the preceding claims, for improving the transport behavior of water-containing ore beneficiation residues.

11. Use of superabsorbents, as defined in any of the preceding claims, for reducing crust formation on drying of water-containing ore beneficiation residues.

**Revendications**

1. Procédé de traitement de résidus de la préparation de minerais contenant de l'eau avec des superabsorbants

   - pour l'augmentation du module de cisaillement complexe G* à une contrainte de cisaillement de 1 Pa d'au moins 10 % en comparaison du résidu de la préparation de minerais non traité,
   la valeur du module de cisaillement complexe G* du résidu de la préparation de minerais non traité à une sollicitation par contrainte de cisaillement de 1 Pa étant d'au moins 500 Pa,
le module de cisaillement complexe G* étant déterminé par la méthode définie dans la description dans la section « méthodes d'essais »,
et
- pour l'augmentation de la sollicitation maximale d'au moins 10 % en comparaison du résidu de la préparation de minerais non traité,

la valeur de la sollicitation maximale du résidu de la préparation de minerais non traité étant d'au moins 25 Pa,
la sollicitation maximale étant déterminée par la méthode définie dans la description dans la section « méthodes d'essais »,
selon lequel le superabsorbant est ajouté au résidu de la préparation de minerais en quantités de 0,001 à 10 % en poids,
le superabsorbant contenant sous forme polymérisée

a) au moins 50 % en moles, par rapport au superabsorbant, d'un ou de plusieurs monomères monoéthyléniquement insaturés, contenant des groupes acides, le degré de neutralisation des monomères monoéthyléniquement insaturés contenant des groupes acides étant de 15 à 85 % en moles, et
b) 0,015 à 0,1 % en moles, par rapport à la quantité totale de monomères, d'au moins un agent de réticulation,

et le superabsorbant étant réticulé en surface.

2. Procédé selon la revendication 1, **caractérisé en ce que** le résidu de la préparation de minerais à traiter présente une teneur en eau de 5 à 90 % en poids.

3. Procédé selon l'une quelconque des revendications 1 à 2, **caractérisé en ce que** la taille de particule du superabsorbant se situe dans la plage allant de 0,01 à 5 mm.

4. Procédé selon l'une quelconque des revendications 1 à 3, **caractérisé en ce que** le résidu de la préparation de minerais comprend au moins jusqu'à 50 % en poids, par rapport à son poids total, de fractions de grains dans la plage comprise entre 2 $\mu$m et 2 mm.

5. Mélange, comprenant des résidus de la préparation de minerais et des superabsorbants, le mélange

- présentant un module de cisaillement complexe G* $\geq$ 550 Pa à une sollicitation par contrainte de cisaillement de 1 Pa,
le module de cisaillement complexe G* étant déterminé par la méthode définie dans la description dans la section « méthodes d'essais »,
et/ou
- présentant une sollicitation maximale dans la plage $\geq$ 40 Pa,

la sollicitation maximale étant déterminée par la méthode définie dans la description dans la section « méthodes d'essais »,
et le superabsorbant contenant sous forme polymérisée

a) au moins 50 % en moles, par rapport au superabsorbant, d'un ou de plusieurs monomères monoéthyléniquement insaturés, contenant des groupes acides, le degré de neutralisation des monomères monoéthyléniquement insaturés contenant des groupes acides étant de 15 à 85 % en moles, et
b) 0,015 à % en moles, par rapport à la quantité totale de monomères, d'au moins un agent de réticulation,

et le superabsorbant étant réticulé en surface.

6. Mélange selon la revendication 5, **caractérisé en ce qu'**il présente une pente de la plage (beach slope) de 1 à 20 %.

7. Procédé de stockage de résidus de la préparation de minerais dans un réservoir de résidus à ciel ouvert, un superabsorbant étant ajouté aux résidus de la préparation de minerais pendant l'ajout dans le réservoir de résidus ou pendant une période avant l'ajout dans le réservoir de résidus,
le superabsorbant contenant sous forme polymérisée

a) au moins 50 % en moles, par rapport au superabsorbant, d'un ou de plusieurs monomères monoéthyléniquement insaturés, contenant des groupes acides, le degré de neutralisation des monomères monoéthyléniquement insaturés contenant des groupes acides étant de 15 à 85 % en moles, et
b) 0,015 à % en moles, par rapport à la quantité totale de monomères, d'au moins un agent de réticulation,

et le superabsorbant étant réticulé en surface.

8. Utilisation de superabsorbants, tels que définis dans l'une quelconque des revendications précédentes, pour améliorer le comportement de séchage de résidus de la préparation de minerais contenant de l'eau.

9. Utilisation de superabsorbants, tels que définis dans l'une quelconque des revendications précédentes, pour améliorer les propriétés de stockage de résidus de la préparation de minerais contenant de l'eau.

10. Utilisation de superabsorbants, tels que définis dans l'une quelconque des revendications précédentes, pour améliorer le comportement au transport de résidus de la préparation de minerais contenant de l'eau.

11. Utilisation de superabsorbants, tels que définis dans l'une quelconque des revendications précédentes, pour réduire la formation de croûtes lors du séchage de résidus de la préparation de minerais contenant de l'eau.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2271350 A
- DE 3544770
- WO 03022896 A
- EP 1609810 A
- WO 2008009598 A


**In der Beschreibung aufgeführte Nicht-Patentliteratur**

- **FALL M et al.** Potential use of densified polymer-pastefill mixture as waste containment barrier materials. WASTE MANAGEMENT. ELSEVIER, 01. Dezember 2010, vol. 30, 2570-2578
- **F. L. BUCHHOLZ ; A. T. GRAHAM.** Modern Superabsorben Polymer Technology. Wiley-VCH, 1998
- *CHEMICAL ABSTRACTS,* 1332-58-7